# NEUE EUROPÄISCHE PATENTSCHRIFT

(11) **EP 0 457 081 B2**
(45) Veröffentlichungstag und Bekanntmachung des Hinweises auf die Entscheidung über den Einspruch: **12.08.1998**
(45) Hinweis auf die Patenterteilung: 27.09.1995
(21) Anmeldenummer: 91106766.8
(22) Anmeldetag: 26.04.1991
(51) Int. Cl.: H02G 5/06

(54) **Isolator**
Insulator
Isolateur

(30) Priorität: 17.05.1990 DE 4015929
(43) Veröffentlichungstag der Anmeldung: 21.11.1991
(73) Patentinhaber: ASEA BROWN BOVERI AG, 5400 Baden (CH)
(72) Erfinder: Demarmels, Anton, Dr., CH-8127 Forch (CH); Dunz, Thomas, Dr., CH-5413 Birmenstorf (CH); Larsson, Per-Olof, B-3030 Heverlee (BE)

(56) Entgegenhaltungen:
- EP-A- 288 715
- DE-A- 2 526 671
- DE-B- 2 347 927
- US-A- 4 404 423
- PATENT ABSTRACTS OF JAPAN vol. 4, no. 18 (E-171) 13 Februar 1980,& JP-A-54 157287
- PATENT ABSTRACTS OF JAPAN vol. 4, no. 24 (E-173) 29 Februar 1980,& JP-A-54 162186
- IEEE Transactions on power aparatus and systems, vol. PAS-99, No 6 Nov/Dec 1980, pages 2164-2174

## Beschreibung

### TECHNISCHES GEBIET

Bei der Erfindung wird ausgegangen von einem Isolator nach dem Oberbegriff von Patentanspruch 1. Ein derartiger Isolator wird in einer gasisolierten metallgekapselten Hochspannungsanlage zum Abstützen eines spannungsführenden Leiters in der Metallkapselung verwendet. In einer bevorzugten Ausführungsform kann ein solcher Isolator zwei mit Isoliergas gefüllte Abteile der Metallkapselung gegeneinander abschotten.

### STAND DER TECHNIK

Ein Isolator der eingangs genannten Art, welcher zugleich als Schottungsisolator dient, ist aus EP 288 715 A1 bekannt. Dieser Isolator ist gasdicht zwischen Flanschen einer Metallkapselung eingespannt und weist einen aus gehärtetem Giessharz bestehenden Isolatorkörper auf, welcher einen zur Führung von hochgespanntem Strom vorgesehenen zylinderförmigen elektrischen Leiter trägt. Die Mantelfläche des elektrischen Leiters im Bereich des Isolatorkörpers ist mit einer hohlzylindrisch oder gewellt ausgebildeten Koppelschicht aus elektrisch leitfähigem Kunststoff versehen. Diese Koppelschicht weist hohe elastische Verformbarkeit auf und bewirkt zum einen, dass übermassige mechanische Spannungen am Isolatorkörper im Bereich des Leiters vermieden werden. Zum anderen bewirkt sie aber auch, dass das elektrische Feld zwischen der auf Erdpotential befindlichen Metallkapselung und dem auf Hochspannungspotential befindlichen elektrischen Leiter gesteuert wird. Hierdurch werden die zu unerwünschten Teilentladungen führenden Wirkungen von möglicherweise in der Koppelschicht oder auf den Mantelflächen des elektrischen Leiters vorhandenen Gasbläschen oder Spalte eliminiert. Jedoch sind bei diesem Isolator mechanische Beschädigungen des Isolatorkörpers sowie durch langzeitige dielektrische Belastung hervorgerufene Schäden nicht auszuschliessen.

Ein in IEEE Transactions on Power Apparatus and Systems, Vol. PAS-99, No.6 Nov/Dec. 1980, insbesondere Fig. 7 beschriebener Isolator weist einen Isolatorkörper aus Epoxy, einen zentralen hochspannungsführenden Leiter und zwei metallene feldsteuernde Einlagen auf, welche im Isolatorkörper gehalten sind. Eine der beiden Einlagen ist hohlzylindrisch ausgebildet und ist am Hochspannungsleiter angebracht. Die andere Einlage ist ringförmig ausgebildet und ist im Randbereich des Isolatorkörpers auf einem den Isolator umschliessenden Leiterrohr gelagert.

### DARSTELLUNG DER ERFINDUNG

Der Erfindung, wie sie im Patentanspruch 1 angegeben ist, liegt die Aufgabe zugrunde, einen Isolator zu schaffen, bei dem mechanische Beschädigungen des lsolatorkörpers und/oder irreversible, durch langzeitige dielektrische Belastungen hervorgerufene Schäden mit Sicherheit vermieden werden.

Der Isolator nach der Erfindung zeichnet sich auch bei erheblicher mechanischer und dielektrischer Belastung durch eine hohe Lebensdauer aus. Dies ist dadurch bedingt, dass dielektrisch belastete Grenzflächen zwischen Metallkapselung und Isolierstoff sowie zwischen Hochspannungselektrode und Isolierstoff vermieden werden, indem durch gezielten Einsatz, gezielte Ausbildung und gezielte Materialauswahl der Feldsteuerelemente eine räumliche Trennung aller mechanisch und/oder dielektrisch hochbeanspruchten Bereiche des Isolators nach der Erfindung realisiert wird. Der Isolator nach der Erfindung weist zudem eine besonders hohe Betriebssicherheit auf und kann bei vergleichbarer elektrischer und mechanischer Belastung kleiner bemessen sein als ein Isolator nach dem Stand der Technik.

### KURZE BESCHREIBUNG DER ZEICHNUNG

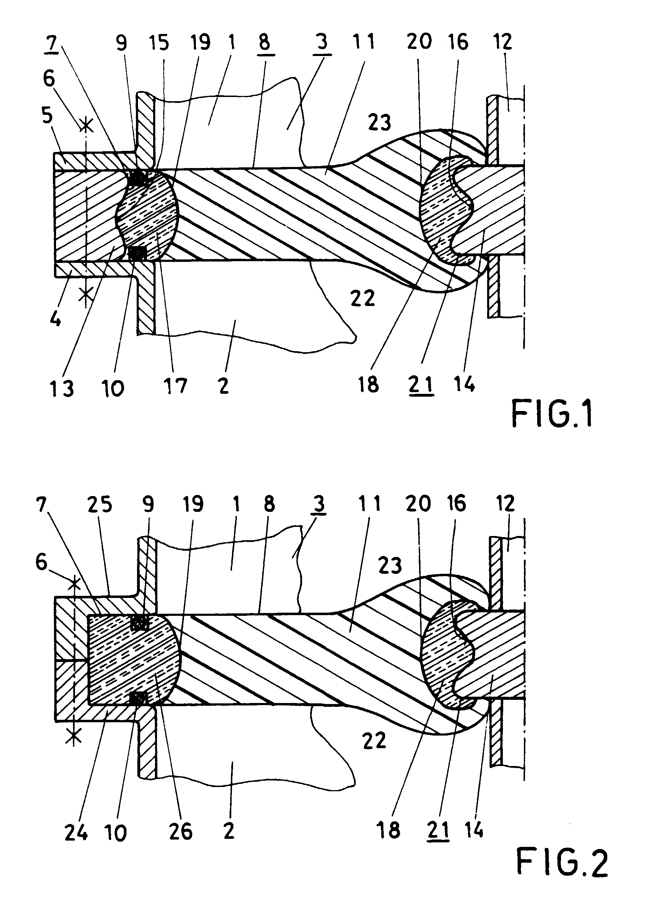

Die Erfindung wird nachfolgend anhand von Zeichnungen näher erläutert. Hierbei zeigen die Figuren 1 bis 3 jeweils eine Aufsicht auf einen axial geführten Schnitt durch den links der Achse gelegenen Teil einer axialsymmetrisch ausgebildeten ersten bzw. zweiten Ausführungsform des Isolators nach der Erfindung.

### WEG ZUR AUSFÜHRUNG DER ERFINDUNG

In allen Figuren beziehen sich gleiche Bezugszeichen auf gleichwirkende Teile. Mit den Bezugszeichen 1, 2 sind zwei geerdete metallene Rohre einer Metallkapselung 3 bezeichnet. Die Metallkapselung 3 ist mit einem Isoliergas, wie etwa Schwefelhexafluorid, von bis zu mehreren bar Druck gefüllt. Die Rohre 1, 2 sind an einander gegenüberstehenden Enden mit Flanschen 4, 5 versehen, zwischen denen mittels einer Verschraubung 6 ein als kreisringförmiger Aussenrand ausgebildetes Halteteil 7 eines Schottungsisolators 8 eingespannt ist. Zwischen nicht bezeichneten, auf den Flanschen 4, 5 und dem Halteteil 7 vorgesehenen, kreisringförmigen Dichtflächen sind Dichtringe 9, 10 eingeklemmt. Der Schottungsisolator 8 weist einen flächenhaften Isolatorkörper 11 auf, welcher wie dargestellt, scheibenförmig ist, ohne weiteres aber auch eine andere flächenhafte Form aufweisen und beispielsweise trichterförmig ausgebildet sein kann. Der Isolatorkörper 11 stützt einen im Inneren der Metallkapselung 3 befindlichen und Hochspannung führenden elektrischen Leiter 12 gegen die geerdete Metallkapselung ab. Anstelle des dargestellten einzigen Leiters 12 kann der Isolatorkörper 11 bei geeigneter Ausbildung selbstverständlich auch mehr als einen Leiter, beispielsweise mehrere Phasenleiter, abstützen. Ein ringförmiger Metallkörper 13 bildet den Aussenrand des Schottungsisolators 8, ein zylinderförmiger Metallkörper 14 dessen Zentrum. Der ringförmige Metallkörper 13 weist eine konkave Innenfläche 15, der zylinderförmige Metallkörper 14 eine konkave Mantelfläche 16 auf. Auf die Innenfläche 15 bzw. die Mantelfläche 16 ist ein als Innen- 17 bzw. Aussenwulst 18 ausgebildetes Feldsteuerelement aufgebracht. Diese Feldsteuerelemente enthalten elektrisch leitenden Kunststoff und weisen eine an den Isolatorkörper 11 grenzende konvexe Oberfläche 19 bzw. 20 auf. Metallkörper 13 und Innenwulst 17 bilden die Halterung 7 und wirken zugleich als feldsteuernde Elektrode. Metallkörper 14 und Aussenwulst 18 bilden eine Hochspannungselektrode 21, die ebenfalls feldsteuernde Funktion aufweist.

Ersichtlich umschliesst der Isolatorkörper 11 das als Aussenwulst 18 ausgebildete Feldsteuerelement und ist unter Bildung je einer nicht bezeichneten Ringfläche bis auf die beiden Stirnflächen des zylinderförmigen Metallkörpers 14 erstreckt. An beiden Stirnflächen ist der zylinderförmige Metallkörper 14 mit Teilen des elektrischen Leiters 12 kontaktiert. Strom kann so von einem Abteil 22 der Metallkapselung durch den Schottungsisolator 8 hindurch zu einem anderen Abteil 23 der Metallkapselung 3 geführt'werden.

Ein solcher Schottungsisolator kann wie folgt hergestellt werden: Zunächst werden zur Herstellung der Halterung 7 und der Hochspannungselektrode 21 die elektrisch gut leitendes Material, wie Aluminium oder Kupfer, enthaltenden Metallkörper 13 bzw. 14 in erste Giessformen eingelegt und jeweils mit einer Masse vergossen, die nach dem Härten die als Innen- 17 bzw. Aussenwulst 18 angeformten Feldsteuerelemente bildet. Die Vergussmasse kann ein mit elektrisch leitenden Partikeln, wie etwa Graphit, Metallpulver oder leitfähig beschichteten keramischen Pulvern gefülltes Polymer, etwa ein Thermoplastwie Polycarbonat, ein Duroplast oder ein Elastomer, sein. Der Füllstoffanteil an elektrisch leitfähigem Material sollte hierbei so gross sein, dass der spezifische Widerstand der Vergussmasse höchstens 10¹² Ω·m beträgt. Geeignete Vergussmassen enthalten als Füllstoff feinkörnige Kerami kpulver auf der Basis von beispielsweise Quarz oder Aluminiumoxid mit Teilchengrössen von typischerweise einigen um. Die Pulverteilchen sind mit einer etwa durch Pyrolisieren aufgebrachten leitfähigen Schicht aus beispielsweise Kohlenstoff und/oder Nickel versehen. Solches Material ist beispielsweise aus EP 131 544 Al bekannt. Im allgemeinen ausreichend ist eine Vergussmasse, die nach dem Aushärten einen spezifischen Widerstand von 10¹⁰ - 10¹² Ωm aufweist. Dies kann mit einem 5 - 20 %igen Anteil an leitfähigem beschichtetem Aluminiumoxid am verbleibenden beispielsweise ebenfalls Aluminiumoxid aufweisenden Teil des Füllstoffs der Vergussmasse erreicht werden. Hierbei beträgt der gesamte Füllstoffanteil bis zu ca. 60 Gew.-% der Vergussmasse.

Die solchermassen hergestellte Halterung 7 und die Hochspannungselektrode 21 werden in eine zweite Giessform eingelegt und mit einer Masse vergossen, die nach dem Härten den Isolatorkörper 11 des Schottungsisolators bildet. Eine geeignete Vergussmasse für den Isolatorkörper ist im allgemeinen ein mit einem pulverförmigen Mineral, wie etwa Aluminiumoxid, Quarz und/oder Dolomit. gefülltes Duroplast, wie etwa ein Epoxid, oder aber auch ein Thermoplast oder Elastomer. Vorzugsweise sind die bei den Vorgussmassen für die Halterung 7. die Hochspannungselektrode 21 und den Isolatorkörper 11 verwendeten Polymer-Komponenten gleichartig, da so eine besonders gute Haftung der als Innen- 17 bzw. Aussenwulst 18 ausgebildeten Feldsteuerelemente am Isolatorkörper 11 erreicht wird.

Am Schottungsisolator 8 treten bei Betrieb in einer Hochspannungsanlage thermische, mechanische und elektrische Belastungen auf. Diese Belastungen werden zum einen dadurch hervorgerufen, dass sich der Leiter 12 und der Metallkörper 14 auf Hochspannungspotential befinden und grosse Ströme führen, zum anderen auch dadurch, dass in den Abteilen 22 und 23 häufig unterschiedliche Gasdrücke herrschen. Durch die grossen Ströme wird der Schottungsisolator erwärmt. Hierdurch wie auch durch unterschiedliche Drücke des Isoliergases in den Abteilen 22 und 23 treten mechanische Spannungen im Schottungsisolator auf. Insbesondere an Stellen, an denen Kraft in den Schottungsisolator eingeleitet wird, d.h. am Halteteil 7 als auch an der Hochspannungselektrode 21, treten erhebliche mechanische Spannungen auf. Zugleich belastet das starke elektrische Feld zwischen Leiter 12 und Metallkapselung 3 den Schottungsisolator stark.

Mechanische Spannungen, die im Bereich kritischer mechanischer Spannungsbelastbarkeit des Isolatorkörpers 11 liegen, treten beim Isolator nach der Erfindung lediglich in Bereichen auf, die jeweils mindestens ein Feldsteuerelement aus elektrisch leitfähigem Kunststoff mit einer an den Isolatorkörper 11 grenzenden, konvexen Oberfläche enthalten. Unter kritischer mechanischer Spannungsbelastbarkeit ist hierbei eine Spannungsbelastung zu verstehen, bei der sich im mikroskopischen Bereich makroskopisch nicht erkennbare Schäden bilden können, welche bei Langzeitbelastung zu makroskopischen Schäden und zur Zerstörung des Isolators führen. Die Bereiche der kritischen mechanischen Spannungsbelastbarkeit befinden sich dort, wo mechanische Kraft in den Schottungsisolator 8 eingeleitet wird, also vor allem an der Hochspannungselektrode 21 und an dem Halteteil 7. Die materialmässige Gestaltung dieser Bereiche hinsichtlich ihrer mechanischen Eigenschaften, insbesondere etwa an den Grenzflächen zwischen den Metallkörpern 13, 14 und den Feldsteuerelementen, ist für die dielektrisch bestimmten Grenzflächen zwischen diesen Bereichen, also etwa der Hochspannungselektrode 21 bzw. dem Halteteil 7 und dem Isolatorkörper 11 ohne Bedeutung. Die dielektrisch bestimmten Grenzflächen können daher nahezu unabhängig von mechanischen Festigkeitskriterien gestaltet werden. Sie können durch konvexe Ausbildung dielektrisch optimiert werden.

Da bei der Gestaltung des Isolators nach der Erfindung die mechanischen Spannungen im Isolatorkörper 11 auf einen maximalen Wert festgelegt sind, wird eine mechanische Beschädigung desselben vermieden. Hierdurch lassen sich durch solche mechanische Beschädigung hervorgerufene elektrische Schäden und die somit im elektrischen Dauerbetrieb sich einstellende Reduktion der Lebensdauer des Isolators weitgehend vermeiden.

Mechanische Schäden an den Feldsteuerelementen oder den Grenzflächen zwischen den Feldsteuerelementen und den Metallkörpern 13, 14 sind hingegen für das dielektrische Verhalten des Isolators ohne Bedeutung, da sich die gesamte Hochspannungselektrode 21 bzw. das gesamte Halteteil 7 auf gleichem Potential befinden. Die mechanischen Spannungen in der Hochspannungselektrode 21 und dem Halteteil 7 müssen selbstverständlich auf einen maximalen Wert beschränkt bleiben, damit der Isolator nicht aus mechanischen Gründen versagt.

Hierbei hat es sich als vorteilhaft erwiesen, die Metallkörper 13, 14 mit einer konkaven Innen- bzw. Mantelfläche 15, 16 zu versehen und die Feldsteuerelemente als Innen- 17 bzw. Aussenwulst 18 auf diese Flächen aufzubringen. Durch diese Massnahmen wird eine besonders hohe mechanische Stabilität des Isolators erreicht und werden die durch Krafteinleitung hervorgerufenen Spannungen besonders stark reduziert.

Eine besonders gute Gasdichtigkeit des Isolators wird erreicht, wenn im Bereich der Hochspannungselektrode 21 der Isolatorkörper 11 das als Aussenwulst 18 ausgebildete Feldsteuerelement umschliesst und unter Bildung je einer Ringfläche auf den beiden Stirnseiten des Metallkörpers 14 aufsitzt.

Bei der Ausführungsform des erfindungsgemässen Isolators gemäss Figur 2 ist der Halteteil 7 ausschliesslich von einem zwischen zwei Hohlflanschen 24, 25 der Metallkapselung 3 schwimmend gelagerten ringförmigen Feldsteuerelement 26 gebildet. Das Feldsteuerelement 26 enthält entsprechend den Feldsteurelementen 17 und 18 elektrisch leitfähigen Kunststoff und grenzt entsprechend diesen Feldsteuerelementen mit einer konvexen Oberfläche 19 an den Isolatorkörper 11 an. An einander gegenüberstehenden Stirnflächen des Feldsteurelementes 26 sind nicht bezeichnete Nuten angeordnet, in denen die auf ringförmigen Dichtflächen an einem Hohlflansch 24 bzw. 25 und dem Nutgrund aufliegenden Dichtungsringe 9 bzw. 10 gelagert sind.

Im Gegensatz zur Ausführungsform gemäss Fig. 1 fehlt ein Spannkräfte aufnehmender hohlzylindrischer Metallring 13. Das lediglich schwimmend gelagerte Feldsteuerelement 26 dient daher vor allem der Reduktion des elektrisch kritischen Feldes in den dielektrisch kritischen, Spalte enthaltenden Bereichen zwischen Isolator, Dichtungsringen 9, 10 und Metallkapselung 3, wohingegen bei der Ausführungsform gemäss Fig. 1 das Feldsteuerelement 17 sowohl eine Reduktion des elektrischen Feldes an entsprechenden Orten als auch an seiner Grenzfläche zum Metallring 13 bewirkt.

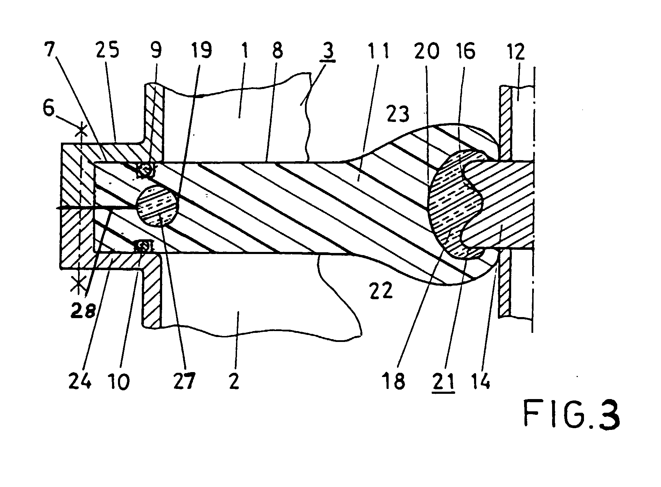

Bei der Ausführungsform des erfindungsgemässen Isolators gemäss Fig. 3 ist im überwiegend vom Isolatorkörper 11 gebildeten Halteteil 7 ein ringförmiges Feldsteuerelement 27 mit kreisförmigem Querschnitt eingebettet Dieses Feldsteuerelement enthält entsprechend dem Feldsteuerelement 26 elektrisch leitfähigen Kunststoff und grenzt allseits mit einer konkaven Oberfläche 19 an den Isolatorkörper 11 an. Am Feldsteuerelement 27 sind Halteteile 28 aus leitfähigem Material, wie Metall oder elektrisch leitendem Kunststoff, angebracht, mit denen das Feldsteuerelement 27 beim Herstellen des Isolators in der Giessform fixiert wird und welche beim Einbau des Isolators in die Anlage am der Stossstelle der beiden Hohlflansche 24, 25 verklemmt werden und so das definierte Massepotential der Anlage an das Feldsteuerelement 27 legen.

Entsprechend der Ausführungsform nach Fig. 2 dient das Feldsteuerelement 27 vor allem der Reduktion des elektrisch kritischen Feldes in den dielektrisch kritischen, Spalte enthaltenden Bereichen zwischen Isolator, Dichtungsring 9, 10 und Metallkapselung.

Die Ausführungsform nach Fig. 3 weist gegenüber der Ausführungsform nach Fig. 2 noch die Vorteile auf, dass das Feldsteuerelement 27 vollständig geschützt im Isolatorkörper 11 gelagert ist, dass die kritischen Randzonen des Halteteils 7 vom Isolatorkörper 11 gebildet werden, und dass eine Grenzstelle zwischen verschiedenen Materialien im kapselungsseitigen Oberflächenbereich des lsolators entfällt.

Die drei vorstehend beschriebenen Ausführungsformen beziehen sich jeweils auf einen Schottungsisolator. Ohne den Rahmen der Erfindung zu verlassen, ist es jedoch auch denkbar, dass der Erfindungsgegenstand als Stützisolator ohne schottende Funktion ausgebildet sein kann. In diesem Fall entfällt zwar der besondere Vorteil, dass der Isolator nach der Erfindung problemlos Kräfte aufnehmen kann, die durch unterschiedliche Gasdrücke in angrenzenden Abteilen hervorgerufen werden. Er zeichnet sich dennoch nach wie vor dadurch aus, dass er durch andere mechanische Einwirkungen, wie etwa Dehnungs- oder Spannkräfte, hervorgerufene Belastungen sicher aufnehmen kann.

## Patentansprüche

1. Isolator für eine gasisolierte metallgekapselte Hochspannungsanlage mit
- einem Giessharz enthaltenden Isolatorkörper (11) aus einer mineralpulvergefüllten Polymer-Komponente,
- einer vom Isolatorkörper (11) getragenen und zur Führung von Hochspannung vorgesehenen Elektrode (21) mit einem eine konkave Mantelfläche (16) aufweisenden, zylinderförmigen Metallkörper (14),
- einem an der Metallkapselung (3) befestigbaren Halteteil (7), welches einen zwischen zwei Flanschen (4, 5) der Metallkapselung (3) einspannbaren, hohlzylindrischen Metallring (13) aufweist oder zwischen zwei Hohlflanschen (24, 25) der Metallkapselung (3) schwimmend lagerbar ist, und
- mit einem mit dem Isolatorkörper (11) durch Vergiessen verbundenen und in einem ersten Bereich des Isolators, in dem bei thermischer und/oder mechanischer Belastung mechanische Spannungen auftreten, die die kritische mechanische Spannungsbelastbarkeit des Isolatorkörpers (11) erreichen können, angeordneten ersten Feldsteuerelement (18) aus einer mit elektrisch leitfähigen Partikeln oder mit einem elektrisch leitfähig beschichteten Keramikpulver gefüllten Polymer-Komponente, welches Teil der Hochspannungselektrode (21) ist und eine an den Isolatorkörper (11) grenzende konvexe Oberfläche aufweist,
dadurch gekennzeichnet,
- dass ein zweites Feldsteuerelement (17, 26, 27) aus einer mit elektrisch leitfähigen Partikeln oder mit einem elektrisch leitfähig beschichteten Keramikpulver gefüllten Polymer-Komponente vorgesehen ist, welches Teil des Halteteils (7) ist, mit einer konvexen Oberfläche an den Isolatorkörper (11) grenzt und in einem zweiten Bereich des Isolators angeordnet ist, in dem bei thermischer und/oder mechanischer Belastung mechanische Spannungen auftreten, die die kritische mechanische Spannungsbelastbarkeit des Isolatorkörpers (11) erreichen können,
- dass das erste Feldsteuerelement (18) in Form eines Aussenwulstes auf die Mantelfläche des Metallkörpers (14) aufgegossen ist, und
dass das erste (18), das zweite Feldsteuerelement (17, 26, 27) und der Isolatorkörper (11) gleichartige Polymer-Komponenten enthalten.

2. Isolator nach Anspruch 1, dadurch gekennzeichnet, dass die Polymere Duroplaste sind.

3. Isolator nach einem der Ansprüche 1 oder 2, dadurch gekennzeichnet, dass das erste (18) und/oder das zweite Feldsteuerelement (17, 26, 27) leitfähig beschichtetes Keramikpulver als Füllstoffkomponente aufweisen.

4. Isolator nach Anspruch 1, dadurch gekennzeichnet, dass der Isolatorkörper (11) das erste Feldsteuerelement (18) umschliesst und unter Bildung je einer Ringfläche auf die beiden Stirnseiten des Metallkörpers (14) aufgegossen ist.

5. Isolator nach Anspruch 1, dadurch gekennzeichnet, dass der hohlzylindrische Metallring (13) eine konkave Innenfläche (15) aufweist, und dass das zweite Feldsteuerelement (17) in Form eines Innenwulstes auf die Innenfläche aufgegossen ist.

6. Isolator nach Anspruch 1, dadurch gekennzeichnet, dass das Halteteil (7) vom zweiten Feldsteuerelement (26) gebildet ist.

7. Isolator nach einem der Ansprüche 5 oder 6, dadurch gekennzeichnet, dass das zweite Feldsteuerelement (17, 26) ringförmige Dichtflächen aufweist.

8. Isolator nach Anspruch 7, dadurch gekennzeichnet, dass mindestens eine der Dichtflächen in einer Nut angeordnet ist.

9. Isolator nach Anspruch 1, dadurch gekennzeichnet, dass das Halteteil (7) vom Isolatorkörper (11) und dem in den Isolatorkörper (11) eingebetteten zweiten Feldsteuerelement (27) gebildet ist.

## Claims

1. Insulator for a gas-insulated, metal-encapsulated high-voltage installation having
- an insulator body (11) which contains casting resin and is made of a mineral-powder-filled polymer component,
- an electrode (21), which is supported by the insulator body (11), is provided for carrying high voltage and has a cylindrical metal body (14) which has a concave envelope surface (16),
- a holding part (7) which can be mounted on the metal encapsulation (3) and has a hollow-cylindrical metal ring (13), which can be clamped in between two flanges (4, 5) of the metal encapsulation (3), or can be mounted in a floating manner between two hollow flanges (24, 25) of the metal encapsulation (3), and
- having a first field control element (18) which is connected to the insulator body (11) by potting and is arranged in a first region of the insulator, in which mechanical stresses occur in the event of thermal and/or mechanical loading, which mechanical stresses can reach the critical mechanical stress load-bearing capacity of the insulator body (11), which first field control element (18) is made of a polymer component filled with electrically conductive particles or with an electrically conductively coated ceramic powder, is part of the high-voltage electrode (21) and has a convex surface adjacent to the insulator body (11),
characterized
- in that a second field control element (17, 26, 27) is provided, which is made of a polymer component filled with electrically conductive particles or with an electrically conductively coated ceramic powder, is part of the holding part (7), has a convex surface adjacent to the insulator body (11) and is arranged in a second region of the insulator, in which mechanical stresses occur in the event of thermal and/or mechanical loading, which mechanical stresses can reach the critical mechanical stress load-bearing capacity of the insulator body (11),
- in that the first field control element (18) is cast onto the envelope surface of the metal body (14), in the form of an external bead, and
in that the first field control element (18), the second field control element (17, 26, 27) and the insulator body (11) contain identical polymer components.

2. Insulator according to Claim 1, characterized in that the polymers are thermosetting plastics.

3. Insulator according to one of Claims 1 or 2, characterized in that the first field control element (18) and/or the second field control element (17, 26, 27) have/has a conductively coated ceramic powder as the filler component.

4. Insulator according to Claim 1, characterized in that the insulator body (11) encloses the first field control element (18) and is cast onto the two ends of the metal body (14), forming an annular surface in each case.

5. Insulator according to Claim 1, characterized in that the hollow-cylindrical metal ring (13) has a concave inner surface (15), and in that the second field control element (17) is cast onto the inner surface, in the form of an internal bead.

6. Insulator according to Claim 1, characterized in that the holding part (7) is formed by the second field control element (26).

7. Insulator according to either of Claims 5 or 6, characterized in that the second field control element (17, 26) has annular sealing surfaces.

8. Insulator according to Claim 7, characterized in that at least one of the sealing surfaces is arranged in a groove.

9. Insulator according to Claim 1, characterized in that the holding part (7) is formed by the insulator body (11) and the second field control element (27), which is embedded in the insulator body (11).

## Revendications

1. Isolateur utilisé dans un dispositif à haute tension à enveloppe métallique isolé par gaz avec
- un corps isolant (11) contenant une résine moulée constituée d'un composant de polymère rempli de poudre minérale,
- une électrode (21) portée par le corps isolant (11) et prévue pour être mise sous haute tension, avec un corps métallique (14) de forme cylindrique présentant une surface de gaine (16) concave,
- une pièce de support (7) à fixer à l'enveloppe métallique (3), qui présente un anneau métallique (13) en cylindre creux à monter entre deux brides (4, 5) de l'enveloppe métallique (3) ou à placer de façon flottante entre deux brides creuses (24, 25) de l'enveloppe métallique (3), ou
- un premier élément de commande de champ (18) à fixer par moulage avec le corps isolant (11) et aménagé dans une première zone de l'isolateur, car lors de charges thermiques et/ou mécaniques, des tensions mécaniques se produisent, qui peuvent atteindre l'intensité critique admissible de charge de tensions mécaniques du corps isolant (11), élément de commande de champ en un composant de polymère rempli de particules conductrices de l'électricité ou de poudre de céramique enduite de façon à être conductrice de l'électricité, qui est une partie de l'électrode à haute tension (21) et présente une surface supérieure convexe attenante au corps isolant (11),
caractérisé en ce que,
- un deuxième élément de commande de champ (17, 26, 27) est prévu en un composant de polymère rempli de particules conductrices de l'électricité ou de poudre de céramique enduite de façon à être conductrice de l'électricité, deuxième élément de commande de champ qui est une partie de la pièce de support (7), qui est attenant au corps isolant (11) au moyen d'une surface supérieure convexe et est aménagé dans une deuxième zone de l'isolateur, car lors de charges thermiques et/ou mécaniques, des tensions mécaniques se produisent, qui peuvent atteindre l'intensité critique admissible de charge de tensions mécaniques du corps isolant (11), en ce que le premier élément de commande de champ (18) est coulé en forme de bourrelet sur la surface de la gaine du corps métallique (14) et en ce que le premier (18) et le deuxième éléments de commande de champ (17, 26, 27) et le corps isolant (11) contiennent des composants de polymère de même nature.

2. Isolateur suivant la revendication 1, caractérisé en ce que les polymères sont des résines thermodurcissables.

3. Isolateur suivant les revendications 1 ou 2, caractérisé en ce que le premier (18), et/ou le deuxième éléments de commande de champ (17, 26, 27) présentent comme composant de matière de remplissage une poudre de céramique enduite de matière conductrice.

4. Isolateur suivant la revendication 1, caractérisé en ce que le corps isolant (11) comprend le premier élément de commande de champ (18) et qu'en cours de formation de chaque surface annulaire, il est coulé sur les deux surfaces frontales du corps métallique (14).

5. Isolateur suivant la revendication 1, caractérisé en ce que l'anneau métallique (13) en cylindre creux présente une surface intérieure (15) concave, et que le deuxième élément de commande de champ (17) est coulé en forme de bourrelet intérieur sur la surface intérieure.

6. Isolateur suivant la revendication 1, caractérisé en ce que la pièce de support (7) est constituée du deuxième élément de commande de champ (26).

7. Isolateur suivant l'une des revendications 5 ou 6, caractérisé en ce que le deuxième élément de commande de champ (17, 26) présente des surfaces étanches en forme d'anneau.

8. Isolateur suivant la revendication 7, caractérisé en ce qu'au moins une des surfaces étanches est aménagée dans une rainure.

9. Isolateur suivant la revendication 1, caractérisé en ce que la pièce de support (7) est constituée du corps isolant (11) et du deuxième élément de commande de champ (27) inséré dans le corps isolant (11).
